(19) Europäisches Patentamt
European Patent Office
Office européen des brevets

(11) **EP 1 066 508 B1**

(12) **EUROPÄISCHE PATENTSCHRIFT**

(45) Veröffentlichungstag und Bekanntmachung des Hinweises auf die Patenterteilung:
**14.12.2005 Patentblatt 2005/50**

(51) Int Cl.⁷: **G01N 21/89**

(21) Anmeldenummer: **99915713.4**

(22) Anmeldetag: **24.03.1999**

(86) Internationale Anmeldenummer:
**PCT/EP1999/002110**

(87) Internationale Veröffentlichungsnummer:
**WO 1999/049303 (30.09.1999 Gazette 1999/39)**

(54) **VERFAHREN UND VORRICHTUNG ZUR DETEKTION VON FEHLERN IN FLACHGLAS**

METHOD AND DEVICE FOR DETECTING FAULTS IN FLAT GLASS

PROCEDE ET DISPOSITIF PERMETTANT DE DETECTER LES DEFAUTS DU VERRE FEUILLETE

(84) Benannte Vertragsstaaten:
**BE DE ES FI FR GB IT NL PT SE**

(30) Priorität: **25.03.1998 DE 19813072**

(43) Veröffentlichungstag der Anmeldung:
**10.01.2001 Patentblatt 2001/02**

(73) Patentinhaber: **ISRA VISION LASOR GmbH**
**33813 Oerlinghausen (DE)**

(72) Erfinder:
• **HAUBOLD, Wolfgang**
**D-33619 Bielefeld (DE)**

• **DROSTE, Josef**
**D-49219 Glandorf (DE)**
• **PANEFF, Edmund**
**D-33729 Bielefeld (DE)**

(74) Vertreter: **von Kirschbaum, Alexander et al**
**Patentanwälte**
**von Kreisler Selting Werner**
**Postfach 10 22 41**
**50462 Köln (DE)**

(56) Entgegenhaltungen:
**EP-A- 0 576 011        GB-A- 1 376 742**
**US-A- 4 570 074**

**Beschreibung**

Die Erfindung betrifft ein Verfahren und eine Vorrichtung zur Bestimmung der optischen Qualität und zur Detektion von Fehlern von Flachglas oder anderen optisch transparenten Materialien nach dem Oberbegriff des Anspruchs 1, im weiteren am Beispiel Glas beschrieben.

Es sind z. B. aus EP 0 579 011 A1 Verfahren zur Bestimmung der optischen Qualität von Flachglas, insbesondere von Floatglas, bekannt, bei denen eine Videokamera durch das Glas bzw. in Reflexion am Glas eine Beleuchtungsvorrichtung betrachtet. Der Fokus der Videokamera liegt dabei auf dem Glas bzw. der Bahn. Die Videokamera erzeugt dabei Signale in Abhängigkeit von der Qualität des Glases. Diese Signale werden anschließend ausgewertet.

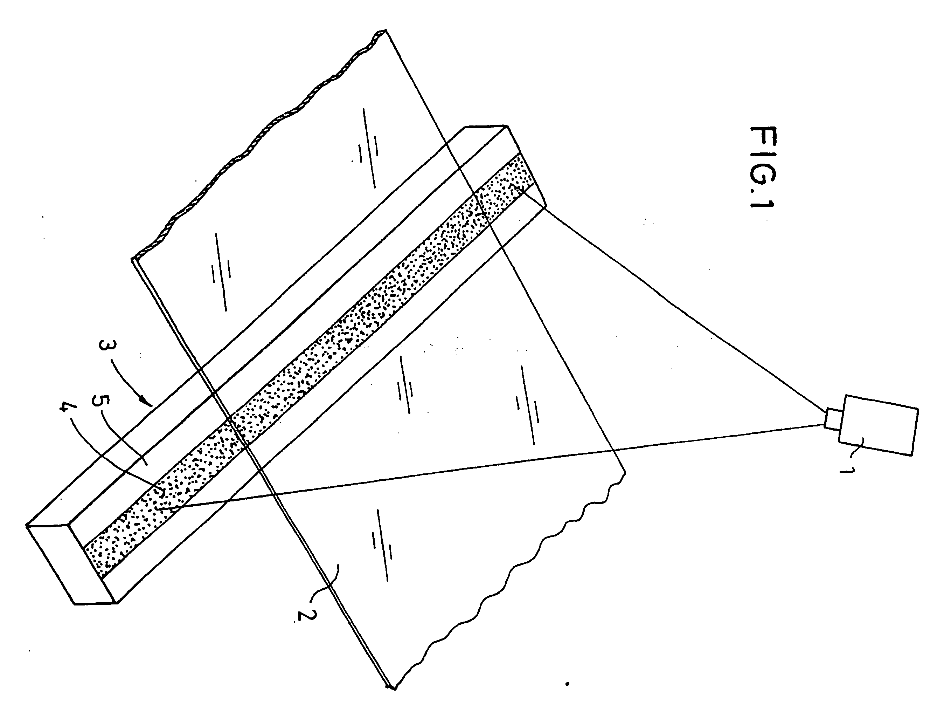

In Fig. 1 ist dieses Verfahren nach dem Stand der Technik veranschaulicht. Eine Videokamera 1 bzw. eine Zeilenkamera betrachtet durch eine Glasbahn 2 eine Beleuchtungsvorrichtung 3, auf der ein Dunkelfeld 4 angeordnet ist.

Bei fehlerfreiem Material des Glases 2 betrachtet die Kamera 1 das Dunkelfeld 4. Durch den optischen Einfluß des Glases 2 wird im Fehlerfall das Sichtfeld der Kamera 1 verzerrt und/oder abgelenkt. Ist dieser Einfluß so groß, daß das Blickfeld der Kamera 1 teilweise oder ganz in das Hellfeld 5 wandert, erscheinen im Videosignal entsprechende Veränderungen.

Das Dunkelfeld 4 muß immer so groß sein, daß das Sichtfeld der Kamera 1 auch bei Erschütterungen und Verbiegungen (z. B. durch Temperatureinflüsse) nicht in das Hellfeld 5 verschoben werden kann. Hierdurch wird die Empfindlichkeit des Systems durch Totzonen begrenzt.

Solange das durch einen Fehler abgelenkte Blickfeld sich auf der Grenze zwischen Dunkel- 4 und Hellfeld 5 befindet, ist die Amplitude des Fehlersignals abhängig von der Größe der Ablenkung. Da jedoch die Amplitude auch noch von der Verschmutzung der geprüften Bahn 2 beeinflußt wird, ist eine Bestimmung der Größe der Ablenkung nicht möglich.

Fehler im Glas 2 haben in der Regel einen Kem (Blase, Einschluß). Da der Kern eines Glasfehlers überwiegend Licht absorbiert, ist seine Vermessung nur im Hellfeld 5 möglich. Im Dunkelfeld 4 ist die Vermessung des Kerns nicht möglich.

Der Erfindung liegt die Aufgabe zu Grunde, ein Verfahren und eine Vorrichtung zur Bestimmung der optischen Qualität optisch transparenter Materialien zu schaffen, bei dem keine Totzonen vorhanden sind und die Stärke der Ablenkung (Brechkraft) und die Größe des Glasfehlers ermittelt werden können. Außerdem soll eine Vermessung des Kerns der Fehler im Glas möglich sein.

Erfindungsgemäß wird diese Aufgabe dadurch gelöst, daß eine Beleuchtungsvorrichtung verwendet wird, deren Farbe und/oder deren Intensität sich von einer Außenkante zur anderen definiert ändert, daß der Betrachtungsfleck der Videokamera sich im fehlerfreien Zustand des Glases ungefähr in der Mitte der Beleuchtungsvorrichtung befindet, daß der Beleuchtungsvorrichtung zwei Videosignale $U_1$, $U_2$ nach Farbe und/oder Intensität zugeordnet werden und daß eine Veränderung der Intensität der Videosignale $U_1$, $U_2$ zur Beurteilung der Qualität des Glases herangezogen wird.

Eine vorteilhafte Ausführungsform zeichnet sich dadurch aus, daß die Beleuchtungsvorrichtung Beleuchtungshälften enthält, die eine unterschiedliche Farbe aufweisen und die Videokamera zumindest einen Farbchip enthält, wobei die Videosignale $U_1$, $U_2$ jeweils einer Farbe zugeordnet sind.

Die Beleuchtungsvorrichtung besteht demnach aus zwei farbigen Hälften (z. B. rot/grün). Die Videokamera enthält einen Farbchip, wobei die Videosignale $U_1$, $U_2$ den beiden Farben zugeordnet sind.

Der Betrachtungsfleck der Kamera befindet sich im fehlerfreien Zustand der Bahn ungefähr auf der Mitte der Beleuchtung. Die beiden Spannungen sind ungefähr gleich. Wird jedoch durch eine optische Verformung der Betrachtungsfleck abgelenkt oder verzerrt, wird eine der beiden Spannungen $U_1$ und $U_2$ erhöht, während sich die andere verringert.

Verknüpft man die beiden Spannungen zu

$$U_{pos} = \frac{U_1 - U_2}{U_1 + U_2}$$

erhält man die Spannung Upos, deren Amplitude nur von der Position des Betrachtungsflecks der Kamera abhängt. Als Maß für die Ablenkung bzw. die Position des Betrachtungsflecks kann aber auch nur die Differenz der beiden Videosignale herangezogen werden.

In dieser Anordnung gibt es keine Totzonen.

Die Amplitude von Upos ist ein Maß für die Stärke der Ablenkung eines Fehlers.

Eine Störung durch Schmutz beeinflußt beide Spannungen $U_1$, $U_2$ und hebt sich in der Formel auf.

Mit

$$U_h = U_1 + U_2$$

wird ein Hellfeld realisiert. Wertet man nur negative Signale von $U_h$ aus, kann man eine Vermessung des Fehlerkerns vornehmen.

Bei dem beschriebenen Verfahren wird die Aufweitung des Betrachtungsflecks durch die Schärfentiefe der Kamera für die Messung der Positionsveränderung genutzt. Bei kleinen Blenden und hoher Schärfentiefe können Farbverlaufsfilter eingesetzt werden.

$U_1$ und $U_2$ kann man auch aus der synchronen Umschaltung der beiden Beleuchtungshälften gewinnen. Die Beleuchtung wird dazu mit jedem Scan umgeschaltet. $U_1$ und $U_2$ sind dann immer die Videosignale vom aktuellen Scan und dem vorherigen. Die Beleuchtungsfarbe ist dann beliebig, als Kamera kann eine S/W-Kamera eingesetzt werden.

Bei der Auswertung wird Schmutz vollständig unterdrückt, Ablenkungen bleiben dagegen nahezu unverändert erhalten.

Weitere Merkmale der Erfindung ergeben sich aus den Figuren, die nachfolgend beschrieben sind. Es zeigt:

Fig. 1 eine Meßmethode nach dem Stand der Technik,

Fig. 2 schematisch das erfindungsgemäße Verfahren mit zwei farbigen Beleuchtungshälften der Beleuchtungsvorrichtung,

Fig. 3 eine Beleuchtungsvorrichtung mit einem Farbverlaufsfilter und

Fig. 4 eine Beleuchtungsvorrichtung mit alternierendem Hell- und Dunkelfeld.

Fig. 1 ist schon in der Beschreibungseinleitung beschrieben und zeigt ein Verfahren zur Detektion von Fehlern in Flachglas nach dem Stand der Technik. Es beinhaltet eine Videokamera 1, eine Glasbahn 2 und eine Beleuchtungsvorrichtung 3 mit einem Dunkelfeld 4 und einem Hellfeld 5. Fehler im Glas 2 verschieben den Betrachtungsfleck der Videokamera 1 vom Dunkelfeld 4 in das Hellfeld 5. Dies wird detektiert und ausgewertet.

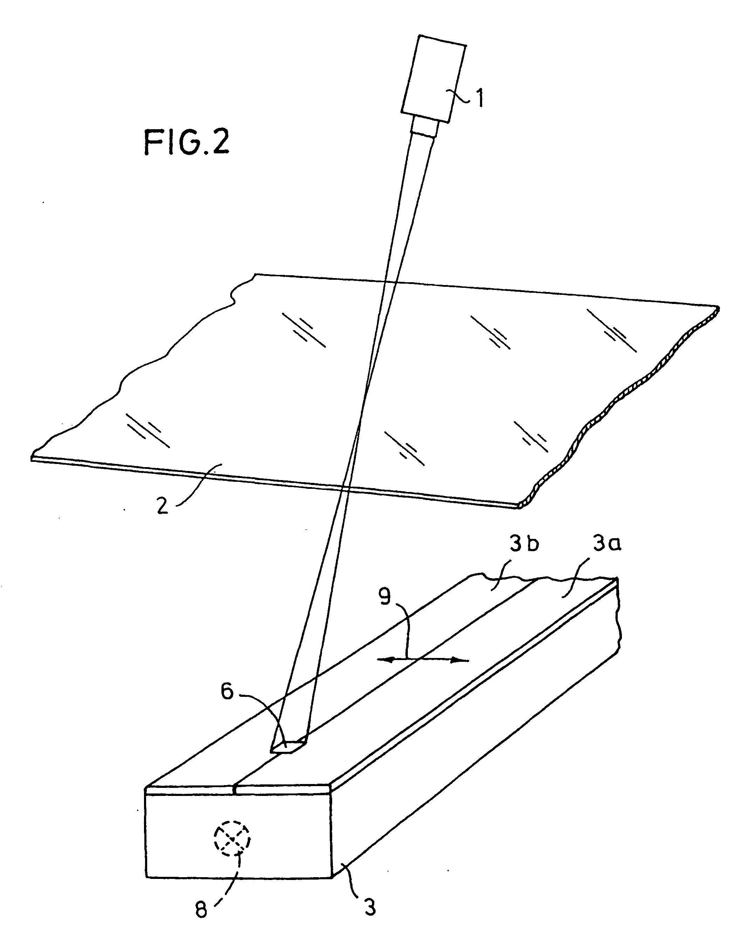

Fig. 2 zeigt schematisch eine Ausführungsform des erfindungsgemäßen Verfahrens mit einer Videokamera 1, die durch eine Glasbahn 2 eine Beleuchtungsvorrichtung 3 betrachtet. Der Fokus der Videokamera 1 liegt dabei auf der Glasbahn 2.

Die Beleuchtungsvorrichtung 3 besteht aus zwei Beleuchtungshälften 3a, 3b, die eine unterschiedliche Farbe aufweisen, z. B. ist die Beleuchtungshälfte 3a rot und die Beleuchtungshälfte 3b grün. Hierzu ist im Inneren eine Lampe 8 angeordnet, wobei die Oberfläche, auf der der Betrachtungsfleck 6 der Videokamera liegt, durchsichtig ist. Der Betrachtungsfleck 6 befindet sich im fehlerfreien Zustand des Glases 2 ungefähr in der Mitte zwischen den beiden Beleuchtungshälften 3a, 3b.

Jeder Beleuchtungshälfte 3a, 3b, d. h. jeder Farbe, z. B. rot und grün, ist ein Videosignal $U_1$, $U_2$ zugeordnet. Hierzu ist in der Videokamera 1 zumindest ein Farbchip vorhanden. Bei fehlerfreiem Glas 2 sind die beiden Videosignale $U_1$, $U_2$ in ihrer Intensität nahezu gleich. Fehler im Glas 2 verschieben den Betrachtungsfleck 6, wie mit den Pfeilen 9 in Fig. 2 dargestellt. Hierdurch wird ein Videosignal stärker und das andere schwächer. Diese Veränderung wird dann, wie in der Beschreibungseinleitung beschrieben, ausgewertet.

Mehrere Kameras können nebeneinander genutzt werden, um beliebige Breiten mit hoher Auflösung vollständig zu prüfen.

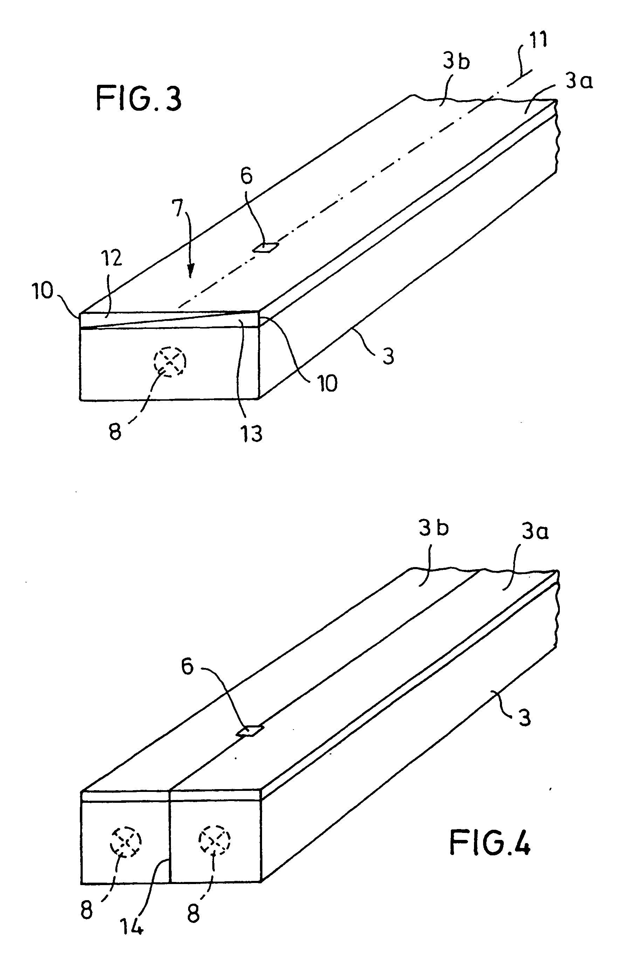

Fig. 3 zeigt schematisch eine Beleuchtungsvorrichtung 3 mit einer Lichtquelle bzw. Lampe 8 und einem Farbverlaufsfilter 7. In der Beleuchtungsvorrichtung 3 nimmt der Farbverlauf von der einen Außenkante 10a zur anderen Außenkante 10b stetig ab, z. B. ist mit 12 ein roter Farbverlauf und mit 13 ein grüner Farbverlauf dargestellt. Der Betrachtungsfleck 6 einer Videokamera 1 (siehe Fig. 2) befindet sich wieder etwa auf der Mitte 11 der Beleuchtungsvorrichtung 3. Eine Verschiebung des Betrachtungsflecks 6 durch Fehler im Glas 2 (siehe Fig. 2) bewirkt wieder eine Änderung der Videosignale $U_1$, $U_2$.

Fig. 4 zeigt eine Beleuchtungsvorrichtung 3 mit alternierendem Hell- und Dunkelfeld. Hierzu ist die Beleuchtungsvorrichtung 3 durch eine Trennwand 14 in zwei Teilräume 3a, 3b geteilt. Der Betrachtungsfleck 6 der Videokamera befindet sich ungefähr in der Mitte zwischen den zwei Beleuchtungshälften 3a, 3b. Jedem Teilraum ist eine Beleuchtung 8 zugeordnet. Das Umschalten der Beleuchtungshälften 3a, 3b erfolgt synchron mit der Zeilenfrequenz der Kamera 1. Damit ergibt sich ein etwa gleichgroßes Videosignal, unabhängig davon, welche Beleuchtungshälfte 3a, 3b eingeschaltet ist. Im Fehlerfall wird der Betrachtungsfleck 6 verschoben. Dadurch ergeben sich am Ort des Fehlers unterschiedliche Einflüsse auf die Signalamplitude, abhängig davon, welche Beleuchtungshälfte 3a, 3b gerade aktiv ist. Zwei aufeinander folgende Zeilen ergeben ein Signalpaar $U_1$, $U_2$.

**Patentansprüche**

**1.** Verfahren zur Bestimmung der optischen Qualität und zur Detektion von Fehlern von Flachglas, insbesondere von Floatglas, oder anderen optisch transparenten Materialien, bei dem eine Videokamera (1) durch das Material (2) bzw. in spiegelnder Reflexion am Material (2) eine Beleuchtungsvorrichtung (3) betrachtet, wobei der Fokus auf dem Material (2) liegt und die Videokamera (1) Signale in Abhängigkeit von der Qualität des Materials (2) erzeugt und diese ausgewertet werden,
**dadurch gekennzeichnet,**

- **daß** eine Beleuchtungsvorrichtung (3) verwendet wird, deren Farbe und/oder deren Intensität sich von einer Außenkante zur anderen definiert ändert,
- **daß** der Betrachtungsfleck (6) der Videokamera (1) sich im fehlerfreien Zustandides Materials (2) ungefähr in der Mitte der Beleuchtungsvorrichtung (3) befindet,
- **daß** der Beleuchtungsvorrichtung (3) zwei Videosignale $U_1$, $U_2$ nach Farbe und/oder Intensität zugeordnet werden und
- **daß** eine Veränderung der Intensität der Vide-

osignale $U_1$, $U_2$ zur Beurteilung der Qualität des Materials (2) herangezogen wird.

2. Verfahren nach Anspruch 1, **dadurch gekennzeichnet, daß** die Beleuchtungsvorrichtung (3) Beleuchtungshälften (3a, 3b) enthält, die eine unterschiedliche Farbe aufweisen und die Videokamera (1) zumindest einen Farbchip enthält, wobei die Videosignale $U_1$, $U_2$ jeweils einer Farbe zugeordnet sind.

3. Verfahren nach Anspruch 2, **dadurch gekennzeichnet, daß** die Beleuchtungsvorrichtung (3) Farbverlaufsfilter (7) enthält.

4. Verfahren nach Anspruch 1, **dadurch gekennzeichnet, daß** die Beleuchtungsvorrichtung (3) Beleuchtungshälften (3a, 3b) enthält, die alternierend an- und ausgeschaltet werden.

5. Verfahren nach einem der Ansprüche 1 bis 4, **dadurch gekennzeichnet, daß** als Maß für die Ablenkung des Fehlers die Differenz der beiden Videosignale $U_1$, $U_2$ herangezogen wird.

6. Verfahren nach Anspruch 5, **dadurch gekennzeichnet, daß** als Maß für die Ablenkung des Fehlers die Beziehung

$$Upos = \frac{U_1 - U_2}{U_1 + U_2}$$

verwendet wird.

7. Verfahren nach einem der Ansprüche 1 bis 6, **dadurch gekennzeichnet, daß** zur Vermessung der Größe des Fehlerkerns im Material (2) eine Abweichung vom Maximalwert der Addition der Videosignale $U_1$, $U_2$, d. h. von

$$U_h = U_1 + U_2$$

verwendet wird.

8. Vorrichtung zur Bestimmung der optischen Qualität und zur Detektion von Fehlern von Flachglas, insbesondere Float-Glas, oder anderen, optisch transparenten Materialien, mit einer Beleuchtungsvorrichtung (3) und einer Videokamera (1) zur Betrachtung der Beleuchtungsvorrichtung (3) durch das Material (2) bzw. in spiegelnder Reflektion am Material (2), wobei der Fokus der Videokamera (1) auf dem Material (2) liegt und die Videokamera (1) derart ausgestaltet ist, dass die Videokamera (1) in Abhängigkeit von der Qualität des Materials (2) Signale für eine Auswertung erzeugt,

**dadurch gekennzeichnet, dass**

die Farbe und/ oder die Intensität der Beleuchtungsvorrichtung (3) von einer Außenkante zur anderen definiert veränderbar ist,

der Betrachtungsfleck (6) der Videokamera (1) im fehlerfreien Zustand des Materials (2) ungefähr in der Mitte der Beleuchtungsvorrichtung (3) angeordnet ist und

von der Videokamera (1) zwei Videosignale (U1, U2) erzeugbar sind, die der Farbe und/ oder der Intensität der Beleuchtungsvorrichtung (3) zugeordnet sind, um eine Veränderung der Intensität der Videosignale ($U_1$, $U_2$) zur Beurteilung der Qualität des Materials (2) heranzuziehen.

9. Vorrichtung nach Anspruch 8, **dadurch gekennzeichnet, dass** die Beleuchtungsvorrichtung (3) Beleuchtungshälften (3a, 3b) enthält, die eine unterschiedliche Farbe aufweisen, und die Videokamera (1) zumindest einen Farbchip enthält, wobei die Videosignale ($U_1$, $U_2$) jeweils einer Farbe zugeordnet sind.

10. Vorrichtung nach Anspruch 9, **dadurch gekennzeichnet, dass** die Beleuchtungsvorrichtung (3) Farbverlaufsfilter (7) aufweist.

## Claims

1. A method for determining the optical quality of and for detecting faults in flat glass, especially float glass, or other optically transparent materials, wherein a video camera (1) is arranged to monitor an illuminating device (3) either through the material (2) or by observing the reflection thereof on the material (2), the focus being on the material (2), and the video camera (1) generates signals in dependence on the quality of the material (2) and these signals are evaluated,

**characterized in**

- **that** an illuminating device (3) is used whose color and/or intensity is changed in a defined manner from one outer edge to the other one,
- **that** the observation spot (6) of the video camera (1) in the faultless condition of the material (2) is located substantially in the middle of the illuminating device (3),
- **that** the illuminating device (3) has assigned thereto two video signals $U_1$, $U_2$ according to color and/or intensity
- and **that** a change of intensity of the video signals $U_1$, $U_2$ is used for evaluating the quality of the material (2).

2. The method according to claim 1, **characterized in**

**that** the illuminating device (3) comprises illumination halves (3a,3b) having different colors, and the video camera (1) includes at least one color chip, with the video signals $U_1$, $U_2$ being assigned respectively to one color.

3. The method according to claim 1, **characterized in that** the illuminating device (3) comprises graduated-density color filters (7).

4. The method according to claim 1, **characterized in that** the illuminating device (3) comprises illumination halves (3a,3b) which are switched on and off alternately.

5. The method according to any one of claims 1 to 4, **characterized in that** the difference between the two video signals $U_1$, $U_2$ is used as a measure of the deflection caused by the fault.

6. The method according to claim 5, **characterized in that**, as a measure of the deflection caused by the fault, use is made of the relation

$$Upos = \frac{U_1 - U_2}{U_1 + U_2}$$

7. The method according to any one of claims 1 to 6, **characterized in that** the measurement of the size of the core of the fault in the material (2) is performed by use of a deviation from the maximum value of the addition of the video signals $U_1$, $U_2$, i.e. from $U_h = U_1 + U_2$.

8. A device for determining the optical quality of and for detecting faults in flat glass, especially float glass, or other optically transparent materials, comprising
   an illuminating device (3) and
   a video camera (1) for monitoring the illuminating device (3) either through the material (2) or by observing the reflection thereof on the material (2), the focus of the video camera (1) being on the material (2) and the video camera (1) being arranged to generate signals for evaluation in dependence on the quality of the material (2),
   **characterized in that**
   the color and/or intensity of the illuminating device (3) can be changed in a defined manner from one outer edge to the other one,
   the observation spot (6) of the video camera (1) in the faultless condition of the material (2) is located substantially in the middle of the illuminating device (3), and
   the video camera (1) is arranged to generate two video signals ($U_1$, $U_2$) which are assigned to the color and/or intensity of the illuminating device (3) so as to use a change of intensity of the video signals ($U_1$, $U_2$) for evaluating the quality of the material (2).

9. The device according to claim 8, **characterized in that** the illuminating device (3) comprises illumination halves (3a,3b) having different colors, and the video camera (1) includes at least one color chip, with the video signals ($U_1$, $U_2$) being assigned respectively to one color.

10. The device according to claim 9, **characterized in that** the illuminating device (3) comprises graduated-density color filters (7).

**Revendications**

1. Procédé pour déterminer la qualité optique et pour détecter des défauts du verre feuilleté, en particulier du verre flotté, ou d'autres matériaux transparents optiques, dans lequel une caméra vidéo (1) observe un dispositif d'éclairage (3) à travers le matériau (2) ou par réflexion spéculaire sur le matériau (2), le point focal se trouvant sur le matériau (2) et la caméra vidéo (1) générant des signaux en fonction de la qualité du matériau (2) et ceux-ci étant analysés, **caractérisé en ce**

   - **qu'**est utilisé un dispositif d'éclairage (3) dont la couleur et/ou l'intensité varient de manière définie d'un bord extérieur à l'autre
   - **que** la zone d'observation (6) de la caméra vidéo (1) se trouve sensiblement au centre du dispositif d'éclairage (3) lorsque le matériau (2) est sans défaut,
   - **que** le dispositif d'éclairage (3) est associé à deux signaux vidéo $U_1$, $U_2$ selon la couleur et/ou l'intensité et
   - **qu'**une modification de l'intensité des signaux vidéo $U_1$, $U_2$ est utilisée pour évaluer la qualité du matériau (2).

2. Procédé selon la revendication 1, **caractérisé en ce que** le dispositif d'éclairage (3) contient des moitiés d'éclairage (3a, 3b) qui présentent une couleur différente et que la caméra vidéo (1) contient au moins une puce couleur, les signaux vidéo $U_1$, $U_2$ étant associés chacun à une couleur.

3. Procédé selon la revendication 2, **caractérisé en ce que** le dispositif d'éclairage (3) contient des filtres dégradés colorés (7).

4. Procédé selon la revendication 1, **caractérisé en ce que** le dispositif d'éclairage (3) contient des moitiés d'éclairage (3a, 3b) qui sont alternativement allumées et éteintes.

**5.** Procédé selon l'une quelconque des revendications 1 à 4, **caractérisé en ce que** la différence des deux signaux vidéo $U_1$, $U_2$ est utilisée en guise de mesure de la déviation due au défaut.

**6.** Procédé selon la revendication 5, **caractérisé en ce que** la relation

$$Upos = \frac{U_1 - U_2}{U_1 + U_2}$$

est utilisée en guise de mesure de la déviation due au défaut.

**7.** Procédé selon l'une quelconque des revendications 1 à 6, **caractérisé en ce qu'**un écart de la valeur maximale de l'addition des signaux vidéo $U_1$, $U_2$, autrement dit de

$$U_h = U_1 + U_2$$

est utilisé pour mesurer la taille du noyau du défaut dans le matériau (2).

**8.** Dispositif pour déterminer la qualité optique et pour détecter des défauts du verre feuilleté, en particulier du verre flotté, ou d'autres matériaux transparents optiques, avec

un dispositif d'éclairage (3) et

une caméra vidéo (1) pour observer le dispositif d'éclairage (3) à travers le matériau (2) ou par réflexion spéculaire sur le matériau (2), le point focal de la caméra vidéo (1) se trouvant sur le matériau (2) et la caméra vidéo (1) générant des signaux en fonction de la qualité du matériau (2) pour l'analyse,

**caractérisé en ce que**

la couleur et/ou l'intensité du dispositif d'éclairage (3) est variable de manière définie d'un bord extérieur à l'autre,

la zone d'observation (6) de la caméra vidéo (1) se trouve sensiblement au centre du dispositif d'éclairage (3) lorsque le matériau (2) est sans défaut et

deux signaux vidéo ($U_1$, $U_2$) qui sont associés à la couleur et/ou à l'intensité du dispositif d'éclairage (3) peuvent être générés par la caméra vidéo (1), pour utiliser les variations de l'intensité des signaux vidéo ($U_1$, $U_2$) pour évaluer la qualité du matériau (2).

**9.** Dispositif selon la revendication 8, **caractérisé en ce que** le dispositif d'éclairage (3) contient des moitiés d'éclairage (3a, 3b) qui présentent une couleur différente et la caméra vidéo (1) contient au moins une puce couleur, les signaux vidéo ($U_1$, $U_2$) étant associés chacun à une couleur.

**10.** Dispositif selon la revendication 9, **caractérisé en ce que** le dispositif d'éclairage (3) contient des filtres dégradés colorés (7).

FIG.1

FIG.2

FIG.3

FIG.4